# EUROPÄISCHE PATENTSCHRIFT

(11) **EP 0 301 650 B1**
(45) Veröffentlichungstag und Bekanntmachung des Hinweises auf die Patenterteilung: **14.07.1993**
(21) Anmeldenummer: 88201556.3
(22) Anmeldetag: 18.07.1988
(51) Int. Cl.: G11B 23/00, G11B 3/68

(54) **Verfahren zur Herstellung und Hinterfütterung eines Galvanos**
Process for the manufacture and back-coating of a galvanic shell
Procédé de production et d'enduction d'une copie faite par voie galvanique

(30) Priorität: 30.07.1987 DE 3725231
(43) Veröffentlichungstag der Anmeldung: 01.02.1989
(73) Patentinhaber: Philips and Du Pont Optical Deutschland GmbH, 30177 Hannover (DE); Philips Electronics N.V., 5621 BA Eindhoven (NL)
(72) Erfinder: Koop, Hermann, Dr., D-3003 Ronnenberg 1 (DE); Pechtheiden-Meier, Claudia, D-3000 Hannover 1 (DE)
(74) Vertreter: Erdmann, Anton, Dipl.-Ing.

(56) Entgegenhaltungen:
- AU-A- 505 168
- PATENT ABSTRACTS OF JAPAN, Bd. 7, Nr. 245 (P-233)(1390) 29.Oktober 1983; & JP-A-58 130449
- PATENT ABSTRACTS OF JAPAN, Bd. 10, Nr. 212 (P-480)(2268) 24.Juli 1986; & JP-A-61 051633
- PATENT ABSTRACTS OF JAPAN, Bd. 9. Nr. 276 (P-402)(1999), 2. November 1985;& JP-A-60121554

## Beschreibung

Die Erfindung bezieht sich auf ein Verfahren zur Herstellung und Hinterfütterung eines Galvanos, das nach wenigstens einem weiteren Vervielfältigungsschritt der Herstellung plattenförmiger Informationsträger dient, das in einem galvanischen Prozeß von einem Stamm-Informationsträger gewonnen wird, wobei eine in dem Stamm-Informationsträger vorgesehene Informationsstruktur auf das Galvano übertragen wird, und das nach dem galvanischen Prozeß vor der Trennung von dem Stamm-Informationsträger auf seiner Rückseite mit einer der mechanischen Verstärkung dienenden Hinterfütterung versehen wird.

Aus der FR-PS 10 12 660 ist ein Verfahren bekannt, das es erlaubt, metallische, dünne Gegenstände mit einer Unterstützung mechanisch zu verstärken. Bei diesen Gegenständen kann es sich beispielsweise um sogenannte Väter oder Mütter handeln, die bei der Schallplatten-Herstellung auf dem Vervielfältigungswege vom Master zur fertigen Kunststoff-Schallplatte benötigt werden. Soll beispielsweise von einem Vater ein galvanischer Abzug gewonnen werden, so wird die Informationsseite des Vaters zunächst in einem galvanischen Prozeß mit einer Kupferschicht versehen. Zur Verstärkung dieser Kupferschicht ist nach der FR-PS 10 12 660 vorgesehen, diese zunächst mit einer Schicht aus einem wärmeaushärtbaren Kunstharz zu versehen. Diese Schicht wird dann wiederum mit einem thermoplastischen Kunststoff überzogen. Dieses Verfahren benötigt also mehrere Schichten, was für den Herstellungsprozeß von Nachteil ist. Darüber hinaus sind wärmeaushärtbare Kunstharze nicht stabil aushärtbar. Dies liegt daran, daß sich beim Aushärtungsprozeß zunächst an der Oberfläche eine dünne, im wesentlichen bereits ausgehärtete Schicht bildet. Die darunterliegenden Schichten können dann nicht mehr richtig austrocknen, und es bilden sich Unregelmäßigkeiten, die sich später in weiteren Vervielfältigungsprozessen durch die Kupferschicht durchdrücken können. Außerdem weist eine derartige Kunstharzschicht keine genügende mechanische Stabilität auf.

Es ist Aufgabe der Erfindung, ein Verfahren zur Herstellung und Hinterfütterung eines Galvanos anzugeben, das einfach anwendbar ist und das die oben genannten Nachteile vermeidet.

Diese Aufgabe wird erfindungsgemäß dadurch gelöst, daß die Hinterfütterung in Form eines flüssig aufgebrachten, UV-aushärtbaren Lackes vorgenommen wird, der auf die Rückseite des Galvanos verteilt und anschließend mittels Bestrahlung mit UV-Licht ausgehärtet wird.

Die Hinterfütterung eines Galvanos wird also hier mittels eines UV-aushärtbaren Lackes vorgenommen, der in lediglich einer Schicht aufgebracht wird. UV-aushärtbarer Lack hat vor allem den Vorteil, daß er bei Bestrahlung mit UV-Licht gleichmäßig aushärtet, so daß sich in der Hinterfütterung keine Inhomogenitäten bilden, die sich später in einem weiteren Vervielfältigungsprozeß evtl. durchdrücken könnten. Darüber hinaus bietet UV-aushärtbarer Lack den Vorteil, daß die Trockenzeit gering ist, so daß bei der Herstellung der Hinterfütterung geringe Zykluszeiten ausreichen. An die Reinheit des UV-Lackes werden nur geringe Anforderungen gestellt, da er nur an der Rückseite des Galvanos aufgedruckt wird und sich kleine Unregelmäßigkeiten nicht durch die Metallschicht hindurchdrücken.

Eine auf diese Weise hergestellte Hinterfütterung eines Galvanos bietet eine gute mechanische Stabilität. Infolgedessen braucht die Metallschicht des Galvanos, meist aus Nickel bestehend, nur eine relativ geringe Dicke aufzuweisen. Dies wiederum bedeutet, daß der galvanische Prozeß, in dem die Metallschicht aufwächst, kurz gehalten werden kann. Es ergibt sich so eine weitere Verkürzung des Herstellungszyklus.

Wichtig ist, daß das von dem Stamm-Informationsträger gewonnene und mit einer Hinterfütterung versehene Galvano erst dann von dem Stamm-Informationsträger getrennt wird, wenn die mechanische Hinterfütterung, also der UV-Lack, aufgebracht und ausgehärtet ist.

Bei dem Stamm-Informationsträger kann es sich sowohl um ein Galvano wie auch um eine Masterplatte handeln. Bei optisch auslesbaren plattenförmigen Informationsträgern sind solche Master im allgemeinen Glasplatten, welche mit einer Fotoresist-Schicht versehen sind, in die die Information darstellende Vertiefungen eingebracht sind. Diese Informationsstruktur soll nun in das Galvano übertragen werden. Dazu wird die Fotoresist-Schicht mit den in ihr eingebrachten Vertiefungen mit einer dünnen Silberschicht versehen, welche für den galvanischen Prozeß benötigt wird, um die Oberfläche des Masters auf diese Weise elektrisch leitfähig zu machen. In einem anschließenden galvanischen Prozeß läßt man dann auf diese Silberschicht eine dünne Nickelschicht aufwachsen.

Ein mit der erfindungsgemäßen Hinterfütterung versehenes Galvano braucht nur eine Nickelschicht einer Dicke kleiner 0,2 mm aufzuweisen. Anschließend wird dann auf diese dünne Nickelschicht ein UV-aushärtbarer Lack aufgebracht und auf der Nickelschicht verteilt. Anschließend wird dieser UV-Lack mittels UV-Licht ausgehärtet. Es hat sich dabei eine Lampenenergie von etwa 80 bis 120 W/cm Lampenlänge als vorteilhaft herausgestellt. Das von der Lampe ausgestrahlte Licht sollte etwa eine Wellenlänge von 200 bis 600 nm aufweisen. Werden diese Parameter, wie oben angegeben, gewählt, so ergibt sich eine Aushärtzeit von etwa 1 bis 5 sec. Dies bedeutet gegenüber den bekannten Verfahren eine wesentliche Verkürzung der Zykluszeit.

Nach einer weiteren Ausgestaltung der Erfindung ist vorgesehen, daß der UV-aushärtbare Lack in einer solchen Menge aufgebracht wird, daß er nach Verteilung und Aushärtung eine Schichtdicke von 0,2 bis 3 mm aufweist.

Eine derartige Schichtdicke der Hinterfütterung hat sich als vorteilhaft erwiesen, da sie einerseits eine genügende mechanische Stabilität sicherstellt, andererseits die Zykluszeit beim Trocknen des Lackes unter 5 sec beträgt und somit sehr kurz ist.

Nach einer weiteren Ausgestaltung der Erfindung ist vorgesehen, daß der flüssige, UV-aushärtbare Lack etwa auf das Zentrum der Rückseite des Galvanos aufgebracht wird und durch Rotation des Galvanos auf diesem verteilt wird.

Diese Verfahrensweise zur Aufbringung eines Lackes auf einen plattenförmigen Informationsträger hat sich bei der Aufbringung einer Schutzlackschicht auf optisch auslesbare plattenförmige Informationsträger bewährt und ist auch bei dem erfindungsgemäßen Verfahren vorteilhaft anwendbar, da sich bei der Rotation des Galvanos der Lack gleichmäßig über die Rückseite des Galvanos verteilt, ohne daß dabei weitere Werkzeuge, welche das Galvano evtl. beschädigen könnten, eingesetzt werden müssen.

Nach weiteren Ausgestaltungen der Erfindung ist vorgesehen, daß die Verteilung des UV-aushärtbaren Lackes auf der Rückseite des Galvanos mittels eines Stempels vorgenommen wird oder daß der UV-aushärtbare Lack in einem Gießprozeß auf die Rückseite des Galvanos aufgebracht wird. Diese Varianten des Verfahrens sind in solchen Fällen vorteilhaft anwendbar, in denen beim Herstellungsprozeß des Galvanos aufgrund vorhandener Anlagen nicht vorgesehen oder nicht möglich ist, das Galvano in Rotation zu versetzen. Auch diese Verfahren gewährleisten eine ausreichend gleichmäßige Verteilung des UV-aushärtbaren Lackes.

Nach einer weiteren Ausgestaltung der Erfindung ist vorgesehen, daß das Galvano vor Aufbringung des UV-aushärtbaren Lackes mit einem elektrischen Kontaktstück versehen wird.

Im Regelfalle soll von einem Galvano wiederum in einem galvanischen Prozeß ein weiterer Abzug hergestellt werden. Dazu ist es notwendig, daß die Nickelschicht des Galvanos elektrisch kontaktiert werden kann. Zu diesem Zweck wird vor Aufbringung des UV-aushärtbaren Lackes die Nickelschicht des Galvanos mit einem elektrischen Kontaktstück versehen. Dieses wird im allgemeinen im Zentrum des Galvanos geschehen, ist aber auch an dessen Rand denkbar. Alternativ besteht die Möglichkeit, vor Aufbringung des UV-aushärtbaren Lackes nicht das elektrische Kontaktstück selbst, sondern zunächst eine Art Blindstück einzusetzen, welches nach Aushärtung des UV-aushärtbaren Lackes entfernt wird und durch das elektrische Kontaktstück ersetzt wird.

Nach einer weiteren Ausgestaltung des Verfahrens nach der Erfindung ist vorgesehen, daß nach dem Aufbringen des flüssigen UV-aushärtbaren Lackes auf diesen eine UV-strahlungsdurchlässige Kunststoffplatte aufgedrückt wird und anschließend der UV-Lack mittels UV-Licht-Bestrahlung durch die Kunststoffplatte hindurch ausgehärtet wird.

Auf diese Weise wird die Nickelschicht des Galvanos also sowohl mit eine UV-aushärtbaren Lackschicht, wie auch mit einem mit einer darauf aufgedrückten Kunststoffplatte versehen, die nach dem Aushärten des UV-aushärtbaren Lackes eine feste Verbindung untereinander eingehen. Es wird so eine noch größere mechanische Stabilität des Galvanos erzielt, so daß das Galvano evtl. auch in mechanischen Vervielfältigungsprozessen einsetzbar ist. Darüber hinaus ergibt sich der Vorteil, daß die Lackschicht aus UV-aushärtbarem Lack, die durch die Kunststoffplatte hindurch mit UV-Licht bestrahlt wird, noch dünner sein kann, da die mechanische Stabilität vor allem durch die Kunststoffplatte gewährleistet ist.

Es ist daher nach einer weiteren Ausgestaltung der Erfindung vorgesehen, daß bei einer Hinterfütterung mit UV-Lack und einer Kunststoffscheibe der flüssige UV-Lack in einer solchen Menge aufgebracht wird, daß er nach Verteilung und Aushärtung eine Schichtdicke von kleiner oder gleich 0,1 mm aufweist. Eine solche Schichtdicke hat sich als Vorteil erwiesen, da sie schnell aushärtbar ist und eine ausreichende Verbindung zwischen dem Galvano selbst und der auf die UV-Lackschicht aufgedrückten Kunststoffplatte gewährleistet.

Nach einer weiteren Ausgestaltung der Erfindung ist vorgesehen, daß das Galvano vor Aufbringung des UV-aushärtbaren Lackes mit einem elektrischen Kontaktstück versehen wird, in dessen Bereich die später aufgesetzte Kunststoffplatte eine Aussparung aufweist. Ist zusätzlich zur Aufbringung des UV-aushärtbaren Lackes auch noch eine Kunststoffplatte zur Hinterfütterung vorgesehen, so ist diese mit einer Aussparung für ein elektrisches Kontaktstück für einen späteren galvanischen Prozeß zu versehen. Das Galvano wird vor Aufbringung des UV-aushärtbaren Lackes mit dem elektrischen Kontaktstück an der Stelle versehen, an der die anschließend aufgesetzte Kunststoffplatte eine Aussparung aufweist.

Die Erfindung wird anhand zweier, in den Zeichnungen dargestellter Ausführungsbeispiele näher erläutert. Es zeigen:
Fig. 1 einen Stamm-Informationsträger und ein von diesem in einem galvanischen Prozeß gewonnenes Galvano mit einer Hinterfütterung aus UV-Lack,
Fig. 2 eine Anordnung nach Fig. 1, in der das Galvano zusätzlich zu der Lackschicht mit einer Kunststoffplatte versehen ist.

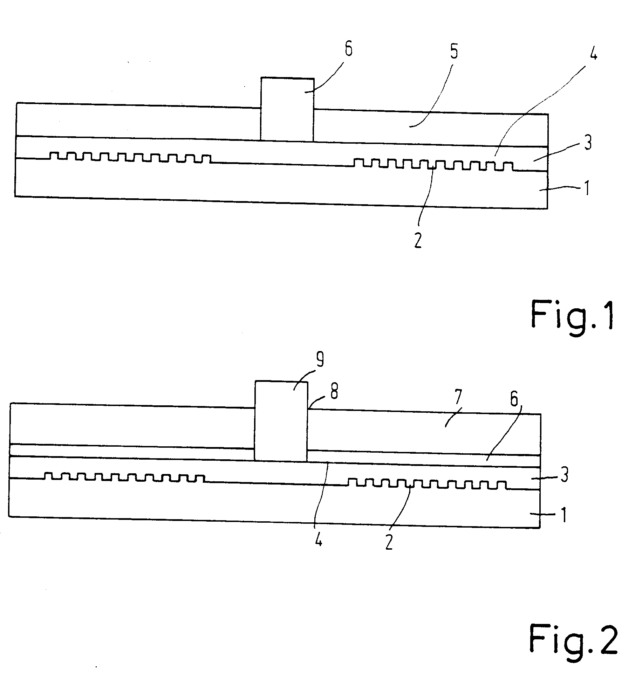

In Fig. 1 ist ein Stamm-Informationsträger 1 dargestellt, welcher auf einer Seite eine Informationsstruktur 2 aufweist. Diese Informationsstruktur soll nun auf ein Galvano übertragen werden. Derartige Vervielfältigungsschritte sind für die Plattenherstellung üblich. Es wird dabei ausgegangen von einem Master, von dem über einen oder mehrere Vervielfältigungsschritte, meist mittels galvanischer Vervielfältigung, die Preßmatrizen gewonnen werden. Bei einer derartigen Vervielfältigung wird im allgemeinen so vorgegangen, daß in mehreren galvanischen Prozessen von einer Masterplatte erst ein sogenannter Vater, von diesem sogenannte Mütter und von diesen wiederum sogenannte Söhne gezogen werden, von denen letztere als Preßmatrizen dienen. In allen diesen Fällen ist das Verfahren nach der Erfindung vorteilhaft anwendbar, da es die galvanischen Prozesse verkürzt und eine gute mechanische Stabilität der gewonnenen Galvanos gewährleistet.

Anstelle des in Fig. 1 dargestellten Galvanos kann auch ein Master vorgesehen sein, der meist aus einer Glasscheibe besteht, auf die eine Fotoresist-Schicht aufgebracht ist, welche die Informationsstruktur trägt. Da die Oberfläche für den Einsatz in einem galvanischen Prozeß leitend sein muß, ist im Falle eines Masters die Fotoresist-Schicht zusätzlich mit einer Silberschicht versehen.

Bei dem in Fig. 1 dargestellten Stamm-Informationsträger 1 handelt es sich um ein Galvano, welches beispielsweise aus Nickel besteht und auf einer Seite die Informationsstruktur 2 aufweist, welche auf ein weiteres Galvano übertragen werden soll. Dazu hat man in in der Figur nicht näher dargestellter Weise auf die Seite des Galvanos, welche die Informationsstruktur 2 aufweist, eine weitere Nickelschicht 3 aufwachsen lassen, welche nun die Informationsstruktur 2 des Stamm-Informationsträgers in negativer Form aufweist. Das Galvano 3 ist auf seiner Rückseite 4 mit einer Hinterfütterung 5 versehen. Bei der Hinterfütterung 5 handelt es sich um einen UV-aushärtbaren Lack. Dieser ist auf die Rückseite 4 des Galvanos 3 in in der Figur nicht näher dargestellter Weise aufgebracht worden. Dies kann beispielsweise durch Aufbringung eines Kloßes geschehen, der anschließend durch Rotation des Galvanos auf der Oberfläche 4 des Galvanos 3 verteilt wird. Im Zentrum des Galvanos 3 ist ein Kontaktstück 6 vorgesehen. Das Kontaktstück 6 ist vor Aufbringung des UV-aushärtbaren Lackes auf das Galvano aufgesetzt worden, so daß sich im Bereich des Kontaktstückes 6 kein UV-Lack befindet.

Nach Aufbringung des noch flüssigen UV-Lackes auf die Rückseite 4 des Galvanos 3 wird der Lack mittels UV-Lichtes ausgehärtet. Erst nach Aushärten des UV-Lackes wird das Galvano 3 von dem Galvano 1 getrennt. Dies ist leicht möglich, da der UV-Lack mit der Rückseite 4 des Galvanos 3 eine feste Verbindung eingegangen ist. Wichtig dabei ist, daß die Trennung der beiden Galvanos erst nach der Aushärtung des UV-Lackes vorgenommmen wird.

Da das Galvano 3 mit der Hinterfütterung 5 in Form des UV-Lackes versehen ist, kann das Galvano 3, das meist aus Nickel besteht, dünn gehalten werden. Dadurch wird der galvanische Herstellungsprozeß nennenwert verkürzt.

Es sei noch darauf hingewiesen, daß die Größenverhältnisse in der Figur nicht maßstabsgerecht sind. Das Galvano 3 (und evtl. auch das Galvano 1) können eine wesentlich geringere Dicke aufweisen als die Hinterfütterung 5.

Als vorteilhaft hat sich eine Schichtdicke von etwa 0,2 bis 3 mm für die Hinterfütterung erwiesen. Wird für die Aushärtung eine Lampenenergie von 80 bis 120 W/cm² Lampenlänge eingesetzt, so ergibt sich bei einer im Wellenlängenbereich von 200 bis 600 nm arbeitenden Lampe eine Aushärtzeit für den UV-aushärtbaren Lack von nur 1 bis 5 sec.

Bei dem Galvano 1 kann es sich selbstverständlich auch um ein nach dem erfindungsgemäßen Verfahren hergestelltes bzw. hinterfüttertes Galvano handeln, das dann eine dünnere Nickelschicht aufweist, welche zusätzlich mit einer Hinterfütterung versehen ist.

In Fig. 2 ist ebenfalls ein Stamm-Informationsträger 1 mit einer Informationsschicht 2 dargestellt, auf den in einem galvanischen Prozeß ein Galvano 3 aufgewachsen ist. Auf die Rückseite 4 dieses Galvanos 3 ist nun ebenfalls eine Lackschicht 6 aus UV-aushärtbarem Lack nach dem Verfahren aufgebracht worden, die hier jedoch dünner gehalten ist als in dem in Fig. 1 dargestellten Ausführungsbeispiel. Dies ist möglich, da in in der Figur nicht näher dargestellter Weise vor dem Aushärten der UV-Lackschicht 6 auf diese eine Kunststoffplatte 7 aufgedrückt wird, die mit dem Lack eine gute haftende Verbindung eingeht und zusätzlich versteifend wirkt. Die Kunststoffplatte 7 ist in ihrem Zentrum mit einer Aussparung 8 versehen, in die ein Kontaktstück 9 eingreift, das mit dem Galvano 3, das meist aus Nickel besteht, elektrisch kontaktiert ist. In diesem Bereich ist ebenfalls die UV-Lackschicht ausgespart.

Nach dem Aufdrücken der transparenten Kunststoffplatte 7 auf die Lackschicht 6 aus UV-aushärtbarem Lack wird dieser durch die Kunststoffplatte 7 hindurch mit UV-Licht bestrahlt.

Die Verteilung des UV-aushärtbaren Lackes kann dabei mittels Aufdrücken der Kunststoffplatte vorgenommmen werden.

Bei diesem zweiten Ausführungsbeispiel ist also zusätzlich zu einer UV-Lackschicht eine transparente Grundplatte vorgesehen, welche eine weitere Versteifung des Galvanos bewirkt. Aus diesem Grunde genügt es, wenn die UV-Lackschicht eine Dicke von kleiner oder gleich 0,1 mm aufweist.

Wenn für die Hinterfütterung ein elektrisch isolierender, elektrolyt- und temperaturbeständiger Werkstoff verwendet wird, ergibt sich der Vorteil, daß auf der Rückseite keine Aufwachsungen erfolgen können. Damit ist eine kontrollierte Nickelaufwachsung mit definierter Dicke auf der Vorderseite des Galvanos ohne spezielle Abschirmung der Rückseite gegeben.

Die gemäß der Erfindung mögliche mechanische stabile Hinterfütterung gewährleistet eine absolut plane Oberfläche des Galvanos. Damit ist ein ganzflächiger definierter und konstanter Abstand zur Anode gegeben. Dies gewährleistet eine reproduzierbare und definierte Dicke in engen Toleranzen der Nickelaufwachsung.

Unebenheiten auf der aufgewachsenen Nickeloberfläche werden durch die Hinterfütterung eingeebnet.

Unebenheiten oder kleine Partikel auf Aufspannvorrichungen, wie z. B. Vakuumspannfutter, für mit Hinterfütterung gefertigte Galvanos führen nicht mehr wie bisher zu Verdrückungen der Information der Galvanos, da diese in die Hinterfütterung eindringen und ausgeglichen werden.

## Patentansprüche

1. Verfahren zur Herstellung und Hinterfütterung eines Galvanos (3), das nach wenigstens einem weiteren Vervielfältigungsschritt der Herstellung plattenförmiger Informationsträger (1) dient, das in einem galvanischen Prozeß von einem Stamm-Informationsträger (1) gewonnen wird, wobei eine in dem Stamm-Informationsträger (1) vorgesehene Informationsstruktur (2) auf das Galvano (3) übertragen wird, und das nach dem galvanischen Prozeß vor der Trennung von dem Stamm-Informationsträger (1) auf seiner Rückseite (4) mit einer der mechanischen Verstärkung dienenden Hinterfütterung (5) versehen wird, dadurch gekennzeichnet, daß die Hinterfütterung (5) in Form eines flüssig aufgebrachten, UV-aushärtbaren Lackes vorgenommen wird, der auf der Rückseite (4) des Galvanos (3) verteilt und anschließend mittels Bestrahlung mit UV-Licht ausgehärtet wird.

2. Verfahren nach Anspruch 1, dadurch gekennzeichnet, daß der UV-aushärtbare Lack in einer solchen Menge aufgebracht wird, daß er nach Verteilung und Aushärtung eine Schichtdicke von 0,2 bis 3 mm aufweist.

3. Verfahren nach Anspruch 1 oder 2, dadurch gekennzeichnet, daß der flüssige, UV-aushärtbare Lack etwa auf das Zentrum der Rückseite (4) des Galvanos (3) aufgebracht wird und durch Rotation des Galvanos (3) auf diesem verteilt wird.

4. Verfahren nach Anspruch 1 oder 2, dadurch gekennzeichnet, daß die Verteilung des UV-aushärtbaren Lackes auf der Rückseite (4) des Galvanos (3) mittels eines Rakels vorgenommen wird.

5. Verfahren nach Anspruch 1 oder 2, dadurch gekennzeichnet, daß die Verteilung des UV-aushärtbaren Lackes auf der Rückseite (4) des Galvanos (3) mittels eines Stempels vorgenommen wird.

6. Verfahren nach Anspruch 1 oder 2, dadurch gekennzeichnet, daß der UV-aushärtbare Lack in einem Gießprozeß auf die Rückseite (4) des Galvanos (3) aufgebracht wird.

7. Verfahren nach einem der Ansprüche 1 bis 6, dadurch gekennzeichnet, daß das Galvano vor Aufbringung des UV-aushärtbaren Lackes mit einem elektrischen Kontaktstück (6) versehen wird.

8. Verfahren nach Anspruch 1, dadurch gekennzeichnet, daß nach dem Aufbringen des flüssigen UV-aushärtbaren Lackes auf diesen eine UV-strahlungsdurchlässige Kunststoffplatte (7) aufgedrückt wird und anschließend der UV-Lack mittels UV-Licht-Bestrahlung durch die Kunststoffplatte (7) hindurch ausgehärtet wird.

9. Verfahren nach Anspruch 8, dadurch gekennzeichnet, daß der flüssige UV-Lack in einer solchen Menge aufgebracht wird, daß er nach Verteilung und Aushärtung eine Schichtdicke von kleiner oder gleich 0,1 mm aufweist.

10. Verfahren nach Anspruch 8 oder 9, dadurch gekennzeichnet, daß das Galvano vor Aufbringung des UV-aushärtbaren Lackes mit einem elektrischen Kontaktstück (9) versehen wird, in dessen Bereich die später aufgesetzte Kunststoffplatte (7) eine Aussparung (8) aufweist.

11. Verfahren nach einem der Ansprüche 1 bis 10, dadurch gekennzeichnet, daß als Hinterfütterung ein elektrisch isolierender, elektrolytbeständiger, temperaturbeständiger Werkstoff verwendet wird.

12. Galvano, hergestellt nach dem Verfahren nach einem der Ansprüche 1 bis 11.

## Claims

1. A method of manufacturing a shell (3) and providing it with a backing, which shell, after at least one further multiplication step, serves for manufacturing disc-shaped information carriers (1) and is derived from a parent information carrier (1) in an electroforming process in which an information structure (2) formed in the parent information carrier (1) is transferred to the shell (3), and after the electroforming process and prior to the separation from the parent information carrier (1) the shell is provided at its back (4) with a backing (5) which serves for mechanical reinforcement, characterised in that the backing (5) is provided in the form of a UV-curable lacquer which is applied in liquid form, which is distributed over the back (4) of the shell (3), and which is subsequently cured by exposure to ultraviolet light.

2. A method as claimed in Claim 1, characterised in that the UV-curable lacquer is applied in such a quantity that it has a thickness of 0.2 to 3 mm after distribution and curing.

3. A method as claimed in Claim 1 or 2, characterised in that the liquid UV-curable lacquer is applied to the back (4) of the shell (3) substantially in the centre and is distributed thereon by rotating the shell (3).

4. A method as claimed in Claim 1 or 2, characterised in that the UV-curable lacquer on the back (4) of the shell (3) is distributed by means of a doctor blade.

5. A method as claimed in Claim 1 or 2, characterised in that the UV-curable lacquer on the back (4) of the shell (3) is distributed by means of a die.

6. A method as claimed in Claim 1 or 2, characterised in that the UV-curable lacquer is applied to the back (4) of the shell (3) in a casting process.

7. A method as claimed in any one of the Claims 1 to 6, characterised in that the shell is provided with an electrical contact member (6) prior to application of the UV-curable lacquer.

8. A method as claimed in Claim 1, characterised in that after application of the liquid UV-curable lacquer a plastics disc (7) which is transparent to ultraviolet radiation is pressed onto said lacquer and subsequently the UV-curable lacquer is cured by exposure to ultraviolet light through the plastics disc (7).

9. A method as claimed in Claim 8, characterised in that the liquid UV-curable lacquer is applied in such a quantity that it has a thickness smaller than or equal to 0.1 mm after distribution and curing.

10. A method as claimed in Claim 8 or 9, characterised in that, prior to application of the UV-curable lacquer, the shell is provided with an electrical contact member (9) at whose location the subsequently mounted plastics disc (7) has a hole (8).

11. A method as claimed in any one of the Claims 1 to 10, characterised in that an electrolyte-resistant and temperature-resistant electrically insulating material is used for the backing.

12. A shell manufactured by means of a method as claimed in any one of the Claims 1 to 11.

## Revendications

1. Procédé de production et d'enduction du verso d'un galvano (3) qui, après au moins un autre stade de reproduction, sert à la production d'un support d'information en forme de disque (1) qui est obtenu à partir d'un support d'information de base (1) par un processus galvanique dans lequel une structure d'information (2) présente dans le support d'information de base (1) est transférée au galvano (3), et qui est doté, au verso, d'une couche d'enduction (5) servant de renfort mécanique après le processus galvanique et avant la séparation du support d'information de base (1), caractérisé en ce qu'on effectue l'enduction du verso (5) au moyen d'un vernis durcissable aux U.V. appliqué sous forme liquide, qui est réparti sur le verso (4) du galvano (3) et est ensuite durci par exposition à un rayonnement U.V.

2. Procédé selon la revendication 1, caractérisé en ce qu'on applique le vernis durcissable aux U.V. en une quantité telle qu'il présente, après répartition et durcissement, une épaisseur de couche de 0,2 à 3 mm.

3. Procédé selon la revendication 1 ou 2, caractérisé en ce qu'on applique le vernis liquide durcissable aux U.V. plus ou moins au centre du verso (4) du galvano (3) et on le répartit sur celui-ci par rotation du galvano (3).

4. Procédé selon la revendication 1 ou 2, caractérisé en ce qu'on procède à la répartition du vernis durcissable aux U.V. sur le verso (4) du galvano (3) à l'aide d'un racle.

5. Procédé selon la revendication 1 ou 2, caractérisé en ce qu'on procède à la répartition du vernis durcissable aux U.V. sur le verso (4) du galvano (3) à l'aide d'un poinçon.

6. Procédé selon la revendication 1 ou 2, caractérisé en ce qu'on applique le vernis durcissable aux U.V. par un procédé de coulée sur le verso (4) du galvano (3).

7. Procédé selon les revendications 1 à 6, caractérisé en ce qu'on dote le galvano d'une pièce de contact électrique (6) avant l'application du vernis durcissable aux U. V.

8. Procédé selon la revendication 1, caractérisé en ce que, après l'application du vernis durcissable aux U.V. liquide, on presse sur celui-ci un disque de matière plastique (7) perméable aux U.V. et on durcit ensuite le vernis U.V. par exposition à un rayonnement U.V. à travers le disque de matière plastique (7).

9. Procédé selon la revendication 8, caractérisé en ce qu'on applique le vernis U.V. liquide en une quantité telle qu'il présente, après répartition et durcissement, une épaisseur de couche inférieure ou égale à 0,1 mm.

10. Procédé selon la revendication 8 ou 9, caractérisé en ce qu'on dote le galvano, avant l'application du vernis durcissable aux U.V., d'une pièce de contact électrique (9) dans la zone de laquelle le disque de matière plastique (7) appliqué ultérieurement présente un évidement (8).

11. Procédé selon l'une quelconque des revendications 1 à 10, caractérisé en ce qu'on utilise pour l'enduction une matière isolante électrique et résistante aux électrolytes et à la température.

12. Galvano produit selon le procédé de l'une quelconque des revendications 1 à 11.
